# EUROPEAN PATENT APPLICATION

(11) **EP 2 267 587 A2**
(43) Date of publication of application: **29.12.2010**
(21) Application number: 10165163.6
(22) Date of filing: 08.06.2010
(51) Int. Cl.: G06F 3/044, G06F 3/046

(54) **Capacitive -inductive touch screen**

(30) Priority: 25.06.2009 US 491990
(71) Applicant: STMicroelectronics Asia Pacific Pte Ltd., Singapore 554574 (SG)
(72) Inventor: Ningrat, Kusuma Adi, Singapore 550500 (SG); Noviello, Giuseppe, Singapore 554574 (SG); Italia, Francesco, 554574, Singapore (SG)
(74) Representative: Style, Kelda Camilla Karen

(57) **Abstract**

A touch screen uses a combination of capacitive sensing and inductive sensing applied to the same sensor pattern. A capacitive sensor uses the electric field formed by the columns and rows of the sensor matrix. An inductive sensor uses the magnetic field formed by current flowing in column and row lines to induce an inductive pen. Using the same sensor lines, the magnetic field created by the oscillating inductive pen is detected. Both methods require no moving elements in the sensor and it is possible to combine both method of detections in the same sensor pattern. Using switch matrices, the sensor lines are operated in an open loop fashion for the capacitive detection mode, and are operated in a closed loop fashion for the inductive detection mode.

## Description

### Field of the Invention

The present invention is related to touch screens, and more particularly, to a touch screen that is capable of operating in a capacitive and inductive mode using the same sensor panel.

### Background of the Invention

A capacitive touch screen can only receive input from a finger, but it gives a different experience to the user and enables multi-touch inputs. A resistive touch screen is able to receive inputs from both a finger and a stylus. However, a resistive touch screen requires more pressure to activate the detection, and a traditional 4/5/8 wire resistive touch screen only allows one point of detection. Although a capacitive touch screen gives a better experience (sensitivity, multi-touch, and other advantages), some users still prefer to use a stylus, especially for hand-writing recognition application.

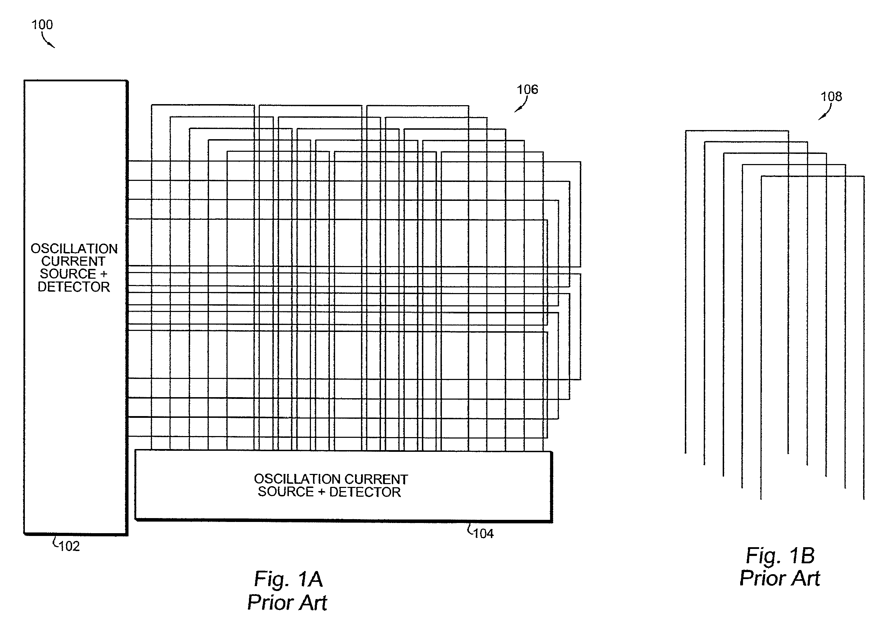

A schematic of a prior art inductive touch screen 100 is shown in FIG. 1A. In the prior art, overlapped closed loop current lines 106 are used to induce an inductive pen at the resonant frequency of the pen. The touch screen 100 also includes a first oscillation current source and detector 102 coupled to the X-lines and a second oscillation current source and detector 104 coupled to the Y-lines. Once the pen is charged up, the same line is used to detect the magnetic field induced by an oscillating pen. The process is repeated for all closed loop paths in the X-axis and the Y-axis. To estimate the exact location of the pen, a weighted average algorithm is used. The sensor is implemented using wires and placed behind the touch screen. In FIG. 1B, the closed loop current lines 108 are shown for the Y-axis only.

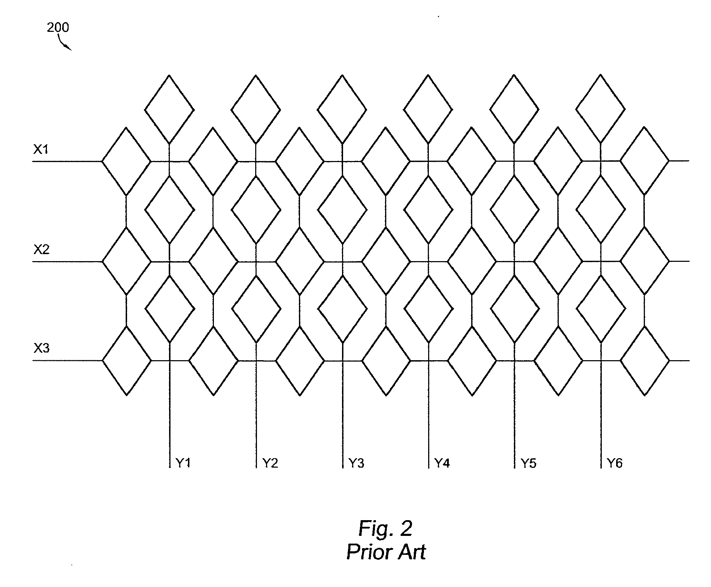

A schematic of a prior art capacitive touch screen 200 is shown in FIG. 2. The prior art capacitive touch screen 200 includes a plurality of open loop X-lines and a plurality of open loop Y-lines. In FIG. 2, three X-lines X1-X3 and five Y-lines Y1-Y5 are shown. Any number of X-lines and Y-lines can be used, as is known in the art. In the prior art capacitive touch screen sensor, cross-capacitance between the X-lines and the Y-lines is measured. A finger touch causes the cross-capacitance on the touched intersection to change. A weighted average is then used to estimates the exact location of finger touch(es). The capacitive sensor is typically realized with an ITO layer (Indium Tin Oxide, which is transparent and conductive) and placed in front of the touch screen.

While the capacitive touch screen and the inductive touch screen each have their respective advantages and disadvantages, what would be desirable is a touch screen that can combine both modes of operation in a single touch screen system.

### Summary of the Invention

According to an aspect of the present invention, a touch screen uses a combination of capacitive sensing and inductive sensing applied to the same sensor pattern. A capacitive sensor uses the electric field formed by the columns and rows of the sensor matrix. An inductive sensor uses the magnetic field formed by current flowing in column and row lines to induce an inductive pen (with a resonant frequency formed by the corresponding inductance and capacitance). Using the same sensor lines, the magnetic field created by the oscillating inductive pen is detected. Both methods may require no moving elements in the sensor and it may be possible to combine both methods of detection in the same sensor pattern. Using switch matrices, the sensor lines are operated in an open loop fashion for the capacitive detection mode, and are operated in a closed loop fashion for the inductive detection mode.

According to a further aspect of the invention, a method of operating a touch screen including a sensor panel, wherein capacitive and inductive detection are performed on a time-sharing basis.

According to another aspect of the invention, a touch screen comprises an arrangement ITO lines, wherein the arrangement of ITO lines are opened for forming a capacitive touch screen in a first mode of operation, and the arrangement of ITO lines are shorted in order to form a closed for forming an inductive touch screen in a second mode of operation.

According to another aspect of the invention, a method of operating a touch screen includes a single ITO sensor pattern, the method comprising using the single ITO line pattern as a capacitive touch screen in a first mode of operation; and using the single ITO line pattern as an inductive touch screen in a second mode of operation.

### Brief Description of the Drawings

The above and other objects, features and advantages of some embodiments of the present invention will become apparent from the following description of embodiments in conjunction with the accompanying drawings, wherein:
FIG. 1A is a schematic of a prior art inductive touch screen system;
FIG. 1B is a schematic of the closed loop current lines for the touch screen system of FIG. 1A for only the Y-axis;
FIG. 2 is a schematic of a prior art capacitive touch screen sensor;
FIG. 3 is a schematic of a portion of a capacitive touch screen sensor;
FIG. 4 is a schematic of a charge amplifier for use with a capacitive touch screen sensor;
FIG. 5 is a schematic of a combined inductive/capacitive touch screen system embodying to the present invention, in which the capacitive mode is illustrated;
FIGS. 6 and 7 are data matrices of the touch screen showing the value of the cross-capacitance associated with all of the touch screen locations, and illustrating valid touches versus noise embodying to the present invention;
FIG. 8 is a schematic of a combined inductive/capacitive touch screen system embodying to the present invention, in which the inductive mode is illustrated;
FIG. 9 is a schematic of a combined inductive/capacitive touch screen system embodying to the present invention, in which a charging phase of the inductive mode is illustrated; and
FIG. 10 is a schematic of a combined inductive/capacitive touch screen system embodying to the present invention, in which a measurement phase of the inductive mode is illustrated.

### Detailed Description

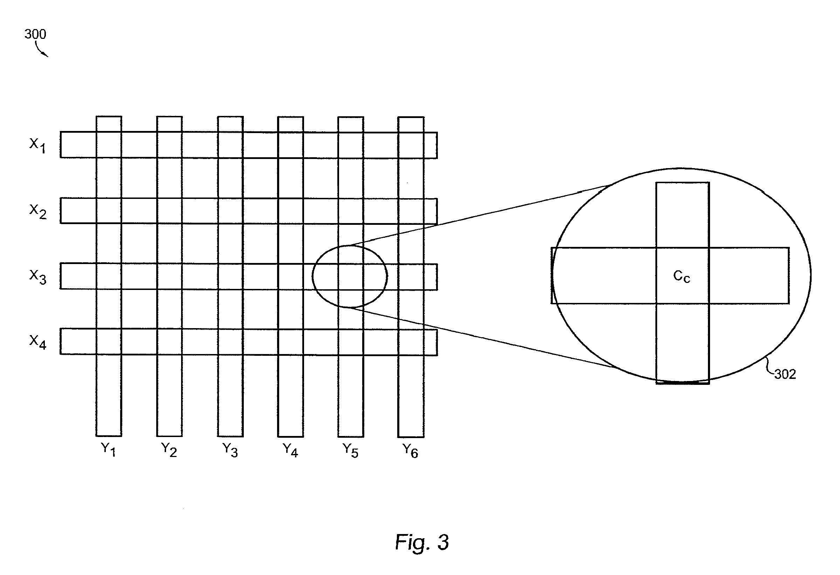

Referring now to FIG. 3, a portion 300 of a capacitive touch screen is shown, having a plurality of open loop X-lines X1-X4, and a plurality of open loop Y-lines Y1-Y6. A portion 302 of the touch screen is further highlighted where, for example, the third X-line crosses the fifth Y-line. The cross-capacitance between the two lines is shown in further detail. A multi-touch capacitive touch screen measures the cross-capacitance between the X-lines and the Y-lines. When a finger presses an intersection, the cross-capacitance is reduced. A charge amplifier is used to quantify the charge transferred by the cross-capacitance, and the value can be digitized.

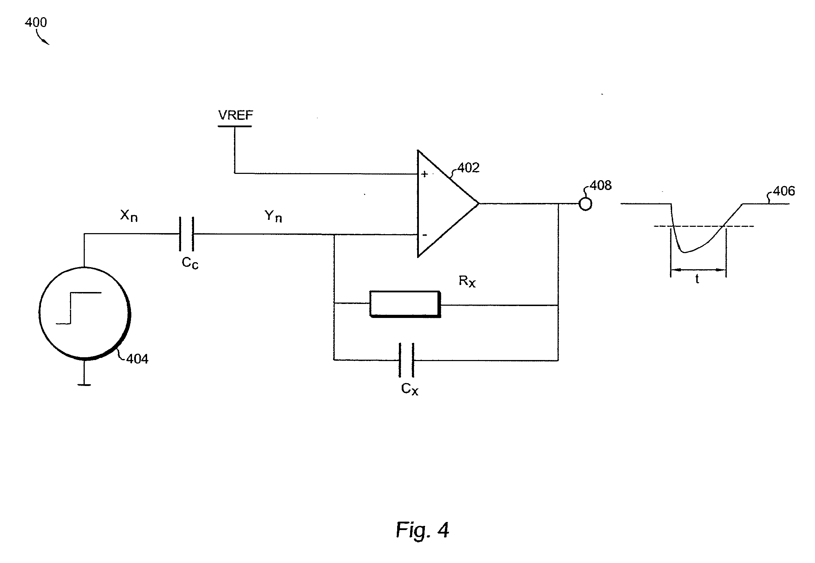

Referring now to FIG. 4, a charge amplifier 400 is shown for use in conjunction with a capacitive touch screen or combination capacitive/inductive touch screen according to an embodiment of the present invention. Charge amplifier 400 includes a differential amplifier or operational amplifier 402 having a positive input for receiving a VREF reference voltage. An input signal 404 represents the signal input supplied by the user, and capacitor CC represents the cross-capacitance as shown in FIG. 3. A feedback impedance including resistor Rx and capacitor Cx is coupled between the output 408 and the negative input of amplifier 402. In operation, a rising edge signal 404 is applied to a representative X-axis line Xn. The cross-capacitance (CC) transfers charge to the corresponding Y-axis line Yn. The charge amplifier 402 amplifies the charge and stores it across amplifier capacitance Cx and Rx discharge the capacitor Cx slowly. The width of a voltage glitch ("t") at the output 408 of the amplifier 402 is proportional with the cross capacitance with some degree of nonlinearity.

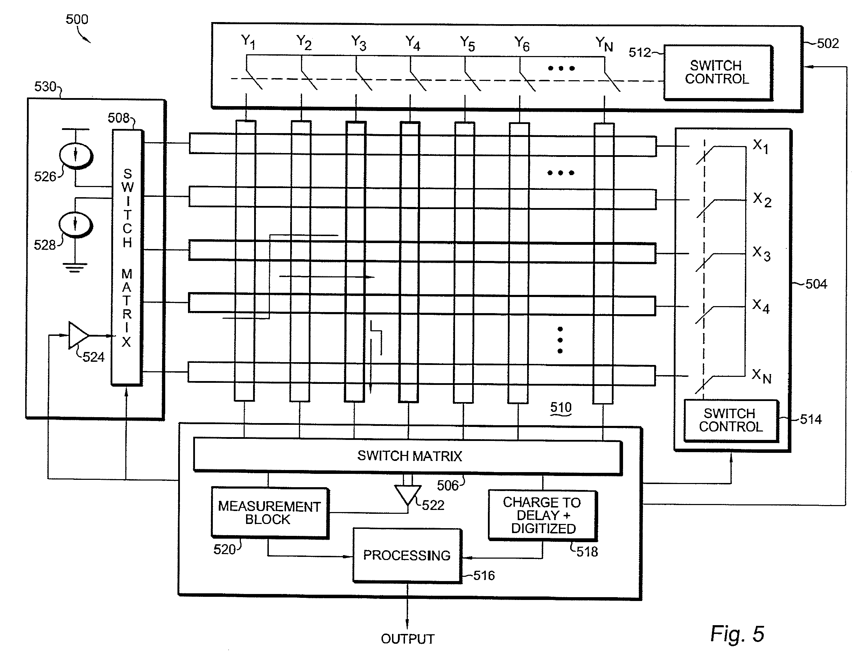

Referring now to FIG. 5, a capacitive/inductive touch screen system 500 is shown, and in the capacitive operating mode. Touch screen system 500, embodying to the present invention, includes a touch screen sensor 510, which is a plurality of open-loop X-lines and Y-lines in the capacitive mode. Sensor 510 can be an ITO sensor mounted on the surface of the touch screen. Touch screen system also includes a first switch matrix 502, coupled to a first end of the Y-lines, and under control of a switch control block 512. Switch matrix 502 includes switches Y1-Yn corresponding to Y-lines Y1-Yn. A second switch matrix 504 is coupled to a first end of the X-lines, and control of a switch control block 514. Switch matrix 504 includes switches X1-Xn corresponding to X-lines X1-Xn. A third switch matrix 506 is coupled to a second end of the Y-lines. Switch matrix is coupled to amplifier 522, measurement block 520, and processing block 516 for providing an output signal. Switch matrix 506 is also coupled to a "charge-to-delay" and digitizing block 518, which is also coupled to processing block 516. A fourth switch matrix 508 is coupled to a second end of the X-lines, and is coupled to a sourcing current source 526 and a sinking current source 528. Switch matrix 508 is also coupled to amplifier 524.

To measure the cross-capacitance in the capacitive operating mode of touch screen system 500, two X-lines and two Y-lines are used. Two lines are used to increase the active area and sensitivity. Two lines are also used because the inductive mode of operation (explained below) requires thin and closely spaced lines in the X-axis and Y-axis to increase resolution. During the capacitive cycle, all of the switches in the switch matrices 502 and 504 are open. In operation, the scanning sequence used in the capacitive operating mode is as follows:
(1) Connect lines X1-X2 to charging signal generator 530 and measure the transferred charge at lines Y1-Y2, Y3-Y4, Y5-Y6,...,Yn-Yn+1 in sequential order.
(2) Connect lines X3-X4 to charging signal generator 530 and measure the transferred charge at Y1-Y2, Y3-Y4, Y5-Y6,...,Yn-Yn+1 in sequential order.
(3) Connect lines Xn-Xn+1 to charging signal generator 530 and measure the transferred charge at Y1-Y2, Y3-Y4, Y5-Y6,...,Yn-Yn+1 in sequential order.

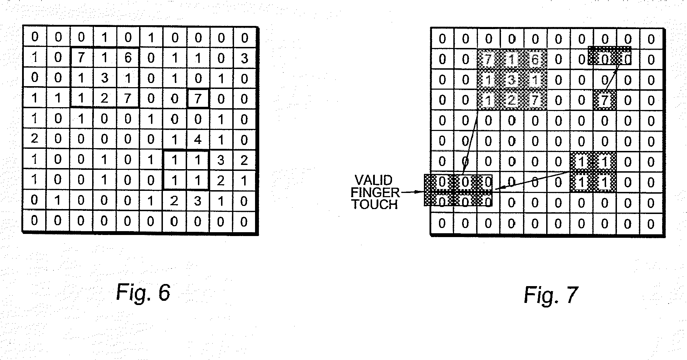

Referring now to FIGS. 6 and 7, all X-line and Y-line intersections are ideally measured to create a data matrix. The touch location is then estimated using weighted average formula. The cross-capacitance in each intersection will form of matrix where a threshold is applied. In the example of FIGS. 6 and 7, the value "6" is taken as a cut-off value, wherein all value below the threshold are forced to a value of zero. A group of non-zero locations with a member bigger than two locations is considered as a valid finger touch. A group smaller or equal to two will be considered as noise. The value of a valid finger touch group's member can be used to calculate the finger location by using weighting average algorithm. In the example shown in FIG. 6, a first group of data values includes nine data values as shown, a second group of data values includes a single data value, and a third group of data values includes four data values. As shown in FIG. 7, the first and third groups are considered valid finger touches.

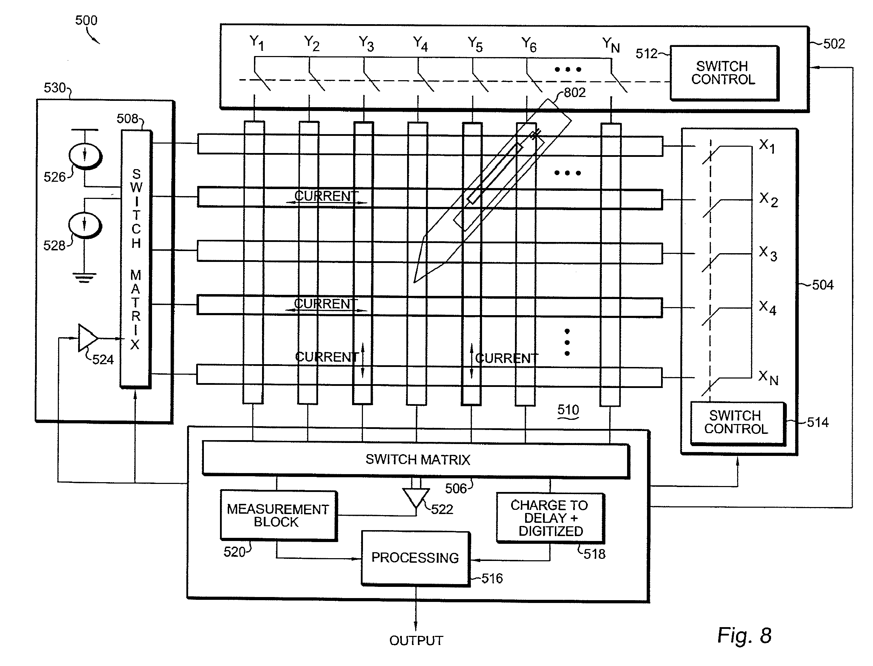

Referring now to FIG. 8, the inductive touch screen mode of operation is illustrated. Figure 8 is substantially the same as FIG. 5, but note the inclusion of a stylus 802 and the switch positions of switch matrices 502 and 504, which are different than in the capacitive mode of operation, and are explained in further detail below. Also note that there is current flowing in the X-lines and Y-lines. According to an embodiment of the present invention, the same ITO sensor pattern 510 is used for inductive touch screen detection. The inductive sensing method is divided into two phases, a charging phase and a measurement phase.

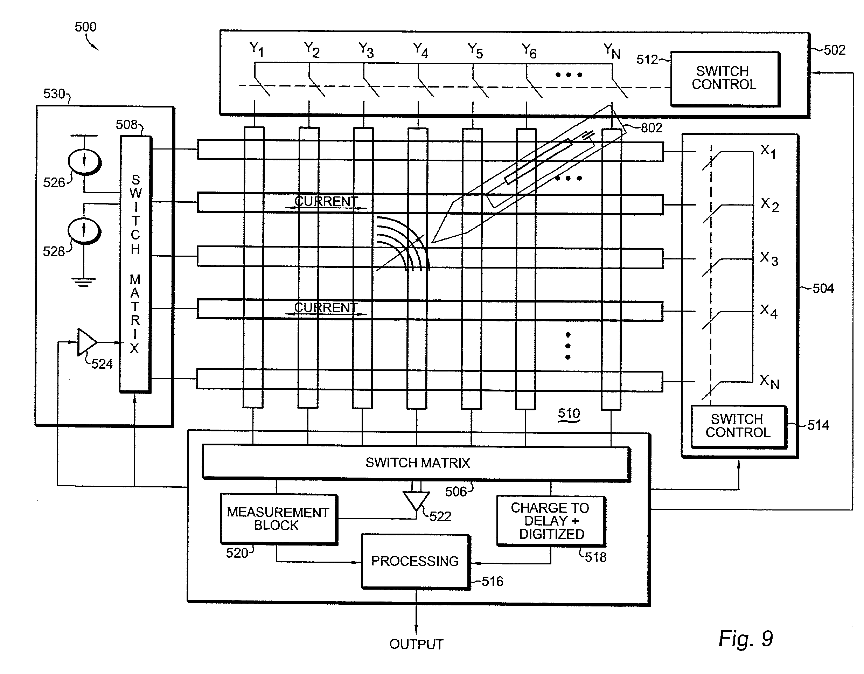

Referring now to FIG. 9, during the charging phase, shorting switch matrix 504 connects switches X2 and X4 (Xn and Xn+2) to form a closed loop conductor while the current generator with switch matrix 508 generates AC current in the closed loop lines with a frequency that is the same as the resonant frequency of the stylus. Generation of alternating current is performed by switch matrix 508 by connecting current sources 526 and 528 to lines X2 and X4 in an alternating sequence. This current will be stopped when the charging period is complete. Stylus 802 comprises an inductor and a capacitor in series. When stylus 802 is induced with magnetic flux that is in the same frequency of the L-C resonant frequency coming from the X2 and X4 sensor lines, it will get charged up and store the energy. If the magnetic flux generated by the sensor lines is stopped, the stylus 802 will dissipate the energy stored and will oscillate for some period of time. This oscillation produces a magnetic flux, which can be detected by the X-lines. The amount of energy stored depends on the position of the stylus 802 with respect to the X2 and X4 lines. The maximum energy developed is when stylus is positioned right in the centre of the closed loop.

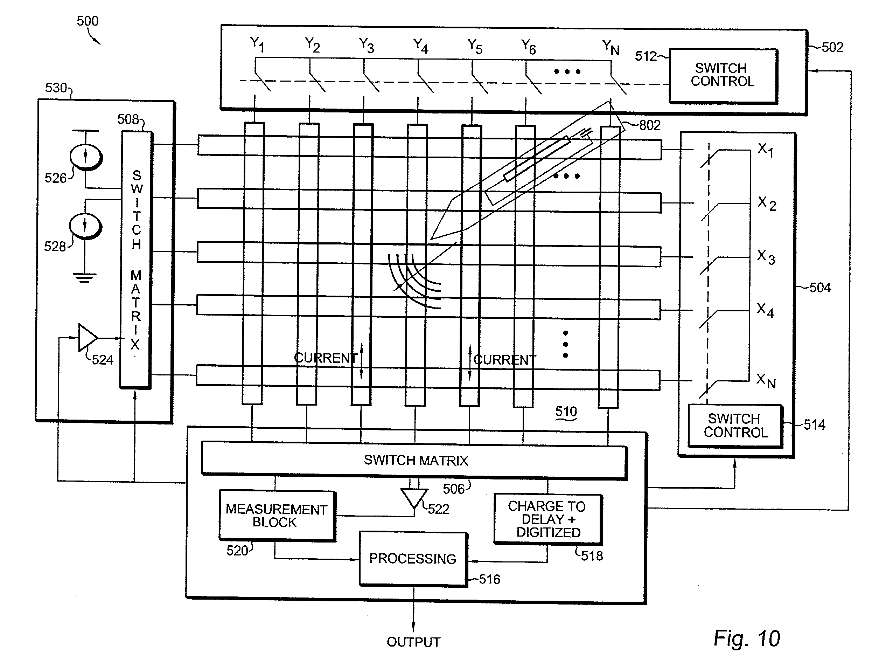

Referring now to FIG. 10, during the detection phase, shorting switch matrix 502 shorts lines Y3 and Y5 (Yn and Yn+2) to form a closed loop conductor to catch magnetic flux generated by the stylus 802. These lines are then connected to amplifier 522 to amplify the signal. The amplified signal is then fed to a rectifier and capacitor in the measurement block 520 to get a DC level that can be measured by an ADC. The amount of magnetic flux caught by the Y3 and Y5 closed loop lines depends on the position of the stylus. Maximum energy is caught when the stylus 802 is right on the center of the conductor loop.

According to an embodiment of the present invention, the configuration of the conductor lines (Xn and Yn) during the charging and detection phases of the inductive operating mode is in a particular sequence to form overlapping closed-loop lines. For example, a particular sequence could be : Y1-Y3, Y2-Y4, Y3-Y5,...Yn-Yn+2. For each Y-axis closed loop lines, detection is performed in all X-lines combinations. After all X-Y lines intersections are measured, the data is available in the form of a data matrix, and the location of the stylus 802 can be calculated using a similar method to that of the capacitive touch screen mode of operation.

According to an embodiment of the present invention, a combination of a capacitive and inductive touch screen has been shown. Using a detection method embodying the present invention, a combined capacitive and an inductive touch screen is possible using single sensor pattern. The capacitive and inductive detection can be performed in time-sharing basis, hence both finger or stylus may be detected at the same time.

Preferred embodiments of the invention have used an ITO sensor. However, alternative embodiments may use alternative sensors.

While the invention has been described with reference to certain embodiments, it will be understood by those skilled in the art that various changes may be made and equivalents may be substituted without departing from the scope of the invention. In addition, many modifications may be made to adapt a particular application to the teachings of the invention without departing from its scope. Therefore, it is intended that the invention not be limited to the particular embodiment disclosed, but that the invention will include all embodiments falling within the scope of the appended claims.

## Claims

1. A touch screen comprising the combination of a capacitive touch screen and an inductive touch screen using a same pattern of a sensor panel.

2. A touch screen as claimed in claim 1, wherein said sensor comprises an ITO sensor panel.

3. A touch screen as claimed in claim 1 or 2 wherein the sensor panel comprises a plurality of X-lines overlapping a plurality of Y-lines.

4. A touch screen as claimed in claim 3 further comprising a switch matrix coupled to a first end of the X-lines and a further switch matrix coupled to a second end of the X-lines.

5. A touch screen as claimed in claim 3 or 4 further comprising a switch matrix coupled to a first end of the Y-lines and a further switch matrix coupled to a second end of the Y-lines.

6. A touch screen as claim in any preceding claim further comprising a processing block coupled to the sensor panel for performing electric field-based processing in a capacitive touch screen mode of operation, and for performing magnetic field-based processing in an inductive touch screen mode of operation.

7. A touch screen as claimed in any preceding claim, wherein said sensor panel comprises an arrangement lines, wherein the arrangement of lines are opened for forming a capacitive touch screen in a first mode of operation, and the arrangement of lines are shorted in order to form a closed for forming an inductive touch screen in a second mode of operation.

8. A method of operating a touch screen including a sensor panel, wherein capacitive and inductive detection are performed on a time-sharing basis.

9. A method as claimed in claim 8, wherein said sensor panel comprises an ITO sensor panel.

10. A method as claim in claim 8 or 9, wherein said sensor panel comprises a single sensor pattern, the method comprising:
using the single line pattern as a capacitive touch screen in a first mode of operation; and
using the single line pattern as an inductive touch screen in a second mode of operation.

11. The method of claim 8, 9 or 10 wherein the sensor panel comprises a plurality of X-lines overlapping a plurality of Y-lines.

12. The method of claim 11 further comprising providing a switch matrix coupled to a first end of the X-lines and providing a further switch matrix coupled to a second end of the X-lines.

13. The method of claim 11 or 12 further comprising providing a switch matrix coupled to a first end of the Y-lines and providing a further switch matrix coupled to a second end of the Y-lines.

14. The method of in any of claims 8 to 13 further comprising providing a processing block coupled to the sensor panel for performing electric field-based processing in a capacitive touch screen mode of operation, and for performing magnetic field-based processing in an inductive touch screen mode of operation.
